# EUROPEAN PATENT SPECIFICATION

(11) **EP 1 956 312 B1**
(45) Date of publication and mention of the grant of the patent: **23.03.2016**
(21) Application number: 08150718.8
(22) Date of filing: 28.01.2008
(51) Int. Cl.: F24F 11/00, G05B 15/02

(54) **Apparatus and method for integrated management of multi-type air conditioning system**
Vorrichtung und Verfahren zur integrierten Verwaltung eines Mehrfachklimaanlagensystems
Appareil et procédé pour la gestion intégrée d'un système de climatisation d'air à fonctions multiples

(30) Priority: 07.02.2007 KR 20070012927
(43) Date of publication of application: 13.08.2008
(73) Proprietor: LG Electronics Inc., Seoul, 150-721 (KR)
(72) Inventor: KWON, Do-Hyung, Seoul (KR); YOUN, Sang-Chul, Seoul (KR); JEON, Duck-Gu, Seoul (KR)
(74) Representative: Vossius & Partner Patentanwälte Rechtsanwälte mbB

(56) References cited:
- EP-A2- 0 893 774
- EP-A2- 1 429 082
- US-A1- 2004 075 689
- US-A1- 2006 058 900
- US-A1- 2006 058 922
- US-B1- 6 229 429

## Description

The present disclosure relates to an apparatus and method for an integrated management of a multi-type air conditioning system, and more particularly, to an apparatus and method for an integrated management of a multi-type air conditioning system capable of displaying one or more air-conditioners at locations on a drawing.

As an air conditioner is being widely used, indoor units are provided at each room of a house or at each office of a building. The indoor units are connected to one outdoor unit, and a system having the indoor unit and the outdoor unit is referred to as a multi-type air-conditioning system.

The multi-type air conditioning system is provided with a local controller for checking each driving state of a plurality of air conditioners and controlling the air conditioners through a gateway.

Recently, an integrated management system for integrally managing a multi-type air conditioning system having one or more air conditioners from a remote distance is being developed.

According to the integrated management system for a multi-type air conditioning system having one or more air conditioners, information regarding a driving status of the multi-type air conditioning system, and information for setting the local controller of the multi-type air conditioning system are collected. Then, the collected information is stored in a database and is managed. When the multi-type air conditioning system is mal-operated, the abnormal status is automatically recognized and an after service is rapidly performed.

In the conventional apparatus for an integrated management of a multi-type air conditioning system, corresponding units (a plurality of air conditioners connected to a lower side of the multi-type air conditioning system) are arranged on a monitor irrespective or substantial locations thereof.

More concretely, ACP (Advanced Control Platform) information is inputted to a window on the monitor, then information of the outdoor unit (or multi-type air conditioners) is inputted to the window, and then basic information of air conditioners connected to the outdoor unit are inputted to the window. After the input, the outdoor unit (or multi-type air conditioners) is displayed on the monitor irrespective of its installation location.

In the conventional apparatus for an integrated management of a multi-type air conditioning system, substantial locations of the outdoor unit, the plurality of air conditioners, and the controller displayed on the monitor can not be easily detected. Accordingly, when a problem occurs in the apparatus, a corresponding device can not be rapidly replaced by a new one due to its undetected location.

Therefore, an object of the present disclosure is to provide an apparatus and method for an integrated management of a multi-type air conditioning system capable of enhancing a user's convenience by displaying devices at locations on a drawing corresponding to locations of a building.

Another object of the present disclosure is to provide an apparatus and method for an integrated management of a multi-type air conditioning system capable of enhancing a user's convenience by freely moving air conditioners and/or external devices to locations on a screen that displays a drawing corresponding to locations of a building in a drag and drop manner.

These and other advantages are achieved with the features of the claims.

The foregoing and other objects, features, aspects and advantages of the present disclosure will become more apparent from the following detailed description of the present disclosure when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram showing a configuration of an apparatus for an integrated management of a multi-type air conditioning system according to the present invention;
FIG. 2 is a flowchart showing a process for registering basic information in a method for an integrated management of a multi-type air conditioning system according to the present invention;

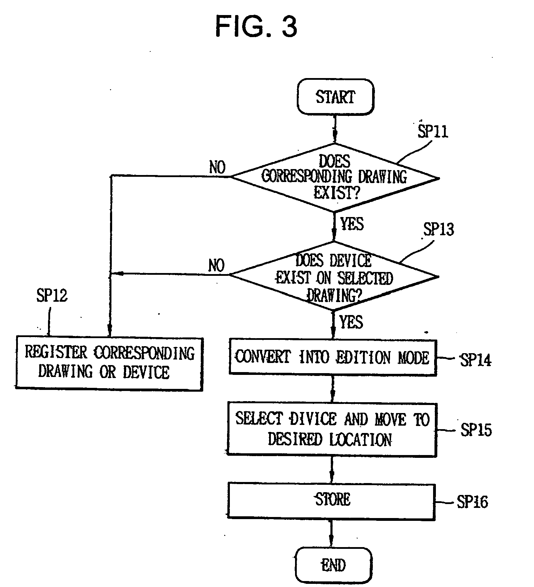

FIG. 3 is a flowchart showing a process for editing locations of external devices in the method for an integrated management of a multi-type air conditioning system according to the present invention; and
FIGS. 4A and 4B are schematic views showing a process for registering basic information of air conditioners and external devices according to the present invention; and
FIG. 5 is a schematic view showing that the method for an integrated management of a multi-type air conditioning system according to the present invention has been substantially applied.

Reference will now be made in detail to the preferred embodiments of the present disclosure, examples of which are illustrated in the accompanying drawings.

Hereinafter, an apparatus and method for an integrated management of a multi-type air conditioning system according to the present invention will be explained in more detail with reference to the attached drawings. Explanations will be given only with regard to parts necessary-to understand the operation of the present invention.

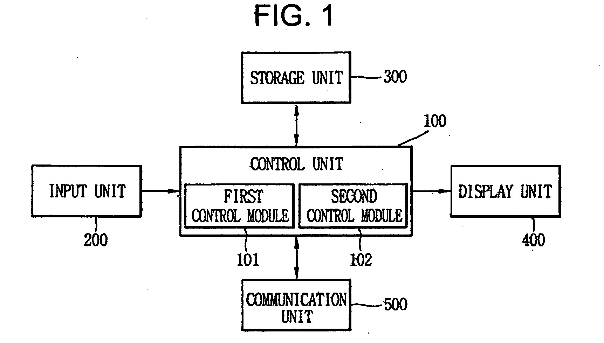

FIG. 1 is a block diagram showing a configuration of an apparatus for an integrated management of a multi-type air conditioning system according to the present invention.

As shown in FIG. 1, the apparatus for an integrated management of a multi-type air conditioning system according to the present invention comprises a control unit 100, an input unit 200, a storage unit 300, a display unit 400, and a communication unit 500.

The control unit 100 is operated by a mode selected by a user, and the mode includes a registration mode, an edition mode, etc.

The control unit 100 includes a first control module 101 for adding one or more air conditioners and/or external devices onto one of drawings included in an ACP (Advanced Control Platform) selected from a plurality of ACPs by a user, and storing the added air conditioners and external devices in the storage unit 300. The first control module 101 is operated in a registration mode.

The ACP is a platform located between the control unit 100 and indoor units or outdoor units, and serves to transmit data between the control unit 100 and a plurality of outdoor units or indoor units connected thereto. The ACP includes a plurality of drawings that indicate an inner structure of one building. The drawings may be implemented as design drawings that indicate an inner structure of one build, and are managed by one ACP. The drawings may display structures of each stair, and may display a structure of one stair.

The control unit 100 is respectively connected to the plurality of ACPs.

The external device may be any device rather than an air conditioners inside a building. For example, the external device includes a lighting device, a fire extinguisher, an entrance door, a desk, etc.

The control unit 100 includes a second control module 102 for selecting one or more air conditioners and/or external devices on a screen that displays a corresponding drawing, and moving the selected devices to a user's desire locations in a drag or drop manner. The second control module 102 is operated in an edition mode.

The screen is implemented so as to display an entire part or one part of the drawing, and is provided with a function to expand or contract the drawing. An expanded or contracted portion on the screen may indicate an entire part or one part of the drawing selected by a user.

The control unit 100 stores location information of the air conditioner or the external device moved on the screen in the storage unit 300. Here, the location information indicates a relative or absolute location about a basic location on horizontal and vertical axes of the drawing on the screen.

For instance, any -point on the drawing is set as a basic location, and a coordinates value on horizontal and vertical axes corresponding to a location of the moved air conditioner or external device is utilized as location information. Here, the coordinates value indicates a location of a cursor on the screen, and the location of the cursor may be obtained by using a function provided from an operating system (OS).

The control unit 100 controls the air conditioners and/or the external devices in a drag or drop manner by using a mouse.

The air conditioners or external devices may be moved to desired locations by controlling the mouse on the screen in a drag or drop manner, or by moving the cursor on the screen by manipulating buttons on a keyboard.

The first and second control modules 101, 102 are implemented as software modules.

The input unit 200 inputs basic information of one or more air conditioners and/or external devices.

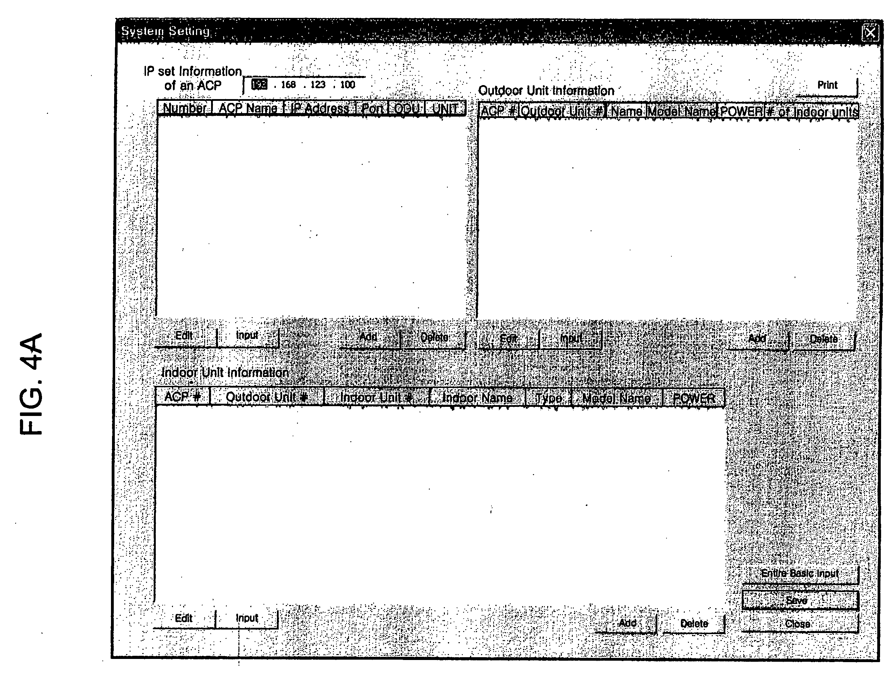

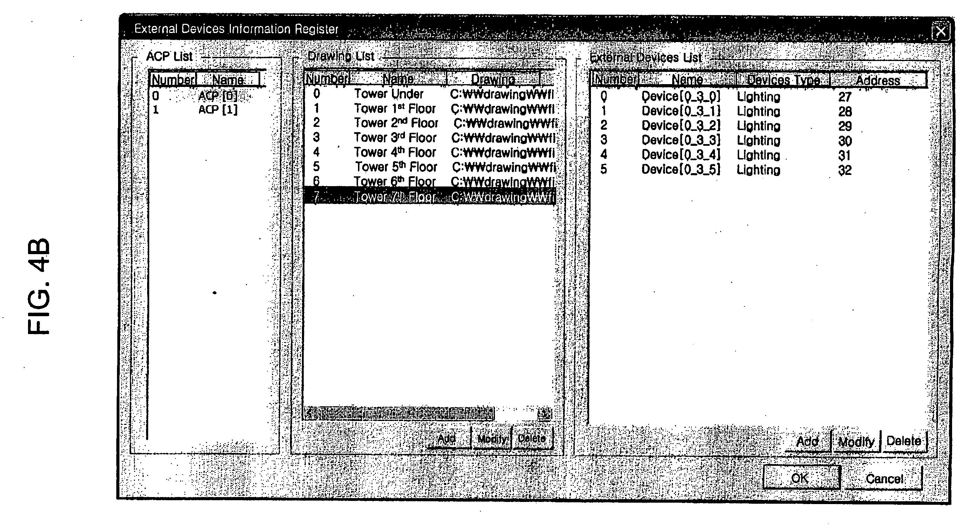

FIGS. 4A and 4B are schematic views showing a process for registering basic information of air conditioners and external devices according to the present invention.

As shown in FIG. 4A, IP set information of an ACP, outdoor unit information, and indoor unit information are inputted through the input unit 200. Here, the outdoor unit information includes an ACP number, an outdoor unit number, an outdoor unit name, a model name, power, the number of indoor units, etc. And, the indoor unit information includes an ACP number, an outdoor unit number, an indoor unit number, an indoor unit name, a type, a model name, power, etc.

As shown in FIG. 4B, basic information for an external device includes a number, a name, the kind, an address, etc.

The storage unit 300 stores basic information of one or more air conditioners and/or external devices under control of the control unit 100.

Also, the storage unit 300 stores an ACP list, a plurality of drawings included in each of a plurality of ACPs, and information about the drawings.

The display unit 400 displays locations of one or more air conditioners and/or external devices on the screen that displays the drawing under control of the control unit 100.

The multi-type air conditioner is an air-conditioning system for satisfying a cooling/heating capacity of a corresponding building by connecting one or more indoor units to one outdoor unit. The multi-type air conditioner can perform an individual control by using the indoor units arranged at each room, and can control a plurality of air conditioners of a building by a local controller.

The communication unit 500 receives basic information of one or more air conditioners and/or external devices from an external communication device, and then applies the basic information to the control unit 100.

The external communication device includes a portable terminal, a personal digital assistants (PDA), a personal computer, a notebook computer, etc. Also, the external communication device is configured to store and edit basic information of one or more air conditioners and/or external devices. Furthermore, the external communication device is configured to transmit the stored basic information of air conditioners and external devices to the communication unit 500.

The communication unit 500 performs a wire communication or a wireless communication.

A computer-readable medium (not shown) for storing a computer program implemented as a software module including the first and second control modules may be additionally provided. The computer-readable medium may be modified by those skilled in the art so as to implement the technical characteristics by the stored computer program.

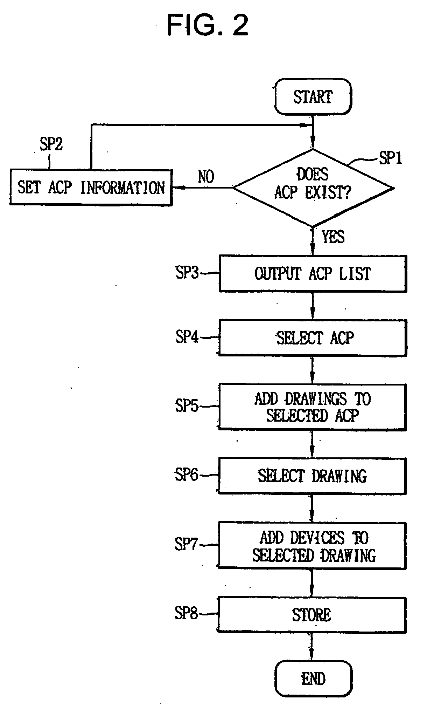

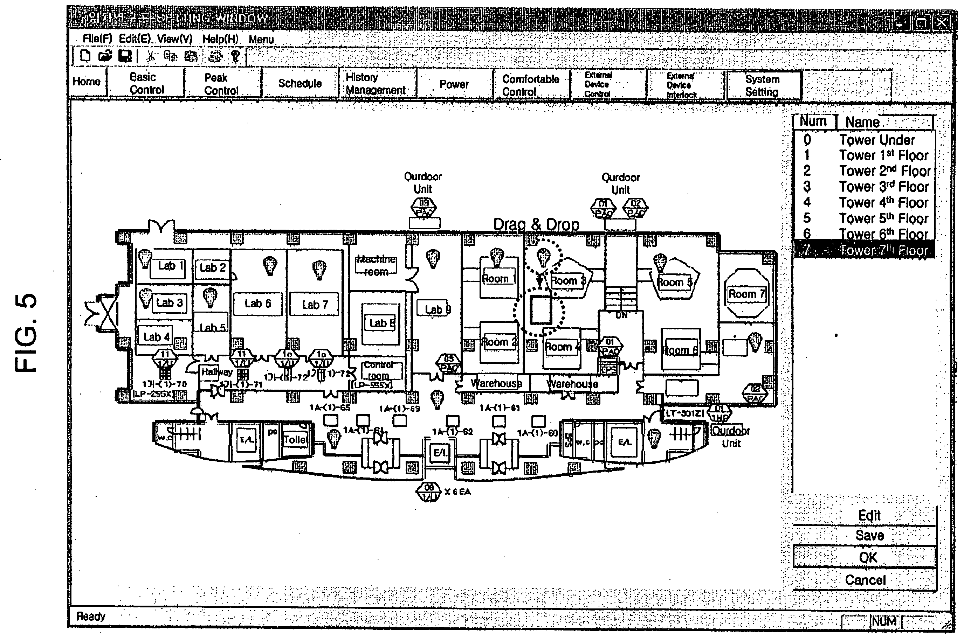

The operation of the apparatus for an integrated management of a multi-type air conditioning system according to the present invention will be explained in more detail with reference to FIGS. 2 and 5.

First, basic information of one or more air conditioners and/or external devices is registered through the input unit 200.

The control unit 100 converts a current mode to a registration mode according to a command inputted through the input unit 200 for a mode conversion into the registration mode.

In the registration mode, the control unit 100 registers basic information of one or more air conditioners and/or external devices by the command inputted through the input unit 200. The registration method will be explained in more detail.

First, the control unit 100 judges whether or not a corresponding ACP (Advanced Control Platform) exists (SP1). If there is no ACP as a result of the judgement, ACP information is inputted to a set window (SP2).

On the contrary, if there is a corresponding ACP, the control unit 100 displays an ACP list according to the command inputted through the input unit 100 (SP3). Then, a user selects a corresponding ASP from the ACP list (SP4), and adds drawings to the selected ACP (SP5).

Then, a corresponding drawing is selected from the added drawings (SP6), and one or more air conditioners and/or external devices are added to the selected drawing through the input unit 200. The added devices are stored, and the registration mode is completed (SP7 and SP8). FIG. 4 shows an example about the inputted basic information.

In a state that basic information of the air conditioners and/or the external devices have been registered and stored in the storage unit 300, a user checks whether a corresponding drawing exists through the input unit 200 (SP11). If a corresponding drawing exists as a result of the check, it is judged whether a corresponding device exists on the corresponding drawing (SP13).

If there is no device in the drawing or there is no drawing as a result of the judgement, a corresponding device or a corresponding drawing is additionally registered (SP12).

If a corresponding device exist on the drawing as a result of the judgement (SP13), the control unit 100 converts the current mode into an edition mode by a command inputted through the input unit 200 for a mode conversion into an edition mode (SP14). Then, the control unit 100 moves one or more air conditioners and/or external devices to desired locations on the screen by dragging a mouse on the screen that displays the drawing, or by moving the cursor with using a keyboard (SP15).

Then, a user presses a storage button (not shown) of the input unit 20 in order to release the edition mode. Accordingly, the control unit 100 stores the edited location information of the air conditioners and/or external devices in the storage unit 300 (SP16). Here, the location information stored in the storage unit 300 indicates locations information of the cursor obtained by using a function provided from an operating system (OS). And, the locations information of the cursor indicates a location on the screen that displays the drawing. Accordingly, the stored location information indicates location information of a corresponding device on the drawing.

After the edition process is completed, the air conditioners and/or the external devices stored in the edition mode are always displayed on the screen that displays the drawing.

FIG. 5 is a schematic view showing that the method for an integrated management of a multi-type air conditioning system according to the present invention has been substantially applied.

As shown in FIG. 5, on the screen that displays the drawing, a location of one of an outdoor unit, an indoor unit, and an external device (e.g., a lighting device) selected by a user is modified. Then, the modified location can be stored in the storage unit 300 by clicking a 'storage' button, or can be outputted to an output device (not shown) such as a printer.

As aforementioned, in the apparatus for an integrated management of a multi-type air conditioning system according to the present invention, one or more air conditioners and/or external devices are displayed at locations on a drawing corresponding to locations of a building, thereby enhancing a user's convenience.

Furthermore, in the apparatus for an integrated management of a multi-type air conditioning system according to the present invention, one or more air conditioners and/or external devices are freely moved on the drawing in a drag and drop manner by using a mouse of a window system, thereby enhancing a user's convenience.

## Claims

1. An integrated management apparatus of a multi-type air conditioning system having one or more air conditioners, comprising:
a control unit (100) that transmits data to the one or more air conditioners and/or external device through an ACP (Advanced Control Platform),
a display unit (400) that displays locations of one or more air conditioners and/or external devices on a screen by the control unit (100),
**characterized in that** the control unit (100) includes a first control module (101) and a second control module (102),
the first control module (101) registers basic information of the one or more air conditioners and/or external devices inputted through an input unit (200) during a registration mode,
the second control module (102) displays the registered one or more air conditioners and/or external devices, selects the registered one or more air conditioners and/or external devices on the screen that displays a corresponding drawing and moves the selected devices to a user's desired locations on the screen that displays a drawing corresponding to an inner structure of a building during an edition mode,
the registration mode, the control unit (100) adds the one or more air conditioners and/or external devices onto one of drawings included in the ACP selected from a plurality of ACPs by a user, and stores location information of the moved air conditioners and/or external devices,
in the edition mode, the control unit (100) moves selected air conditioners and/or external devices to user's desired locations in accordance with a user's input from a mouse, and
the mouse is manipulated in a drag and drop manner.

2. The apparatus of claim 1, further comprising a storage unit (300) that stores the basic information of the one or more air conditioners and/or external devices, and stores location information of the air conditioner and/or the external device moved on the screen during the edition mode.

3. The apparatus of claim 1 or 2, further comprising a communication unit (500) that receives the basic information of the one or more air conditioners and/or external devices from an external communication device.

4. The apparatus of any of claims 1 to 3, wherein the control unit (100) controls selected air conditioners and/or external devices to be moved to desired locations by a user's input through a keyboard.

5. An integrated management method of a multi-type air conditioning system of claim 1, comprising:
registering basic information of one or more air conditioners and/or external devices; and
editing locations of the air conditioners and/or the external devices on a screen,
wherein the editing comprises:
selecting a drawing to which one or more air conditioners and/or external devices have been registered;
moving one or more air conditioners and/or external devices selected by a user to locations on the screen that displays the drawing by the user; and
storing location information of the moved air conditioners and/or external devices,
wherein the step of moving one or more air conditioners and/or external devices performs moving selected air conditioners and/or external devices to user's desired locations in accordance with a user's input from a mouse, and
wherein the mouse is manipulated in a drag and drop manner.

6. The method of claim 5, wherein the step of registering basic information comprises:
selecting an ACP (Advanced Control Platform) from an ACP list;
adding one or more air conditioners and/or external devices onto one of drawings included in the ACP selected by a user; and
storing the added air conditioners and/or external devices.

7. The method of claim 6, further comprising receiving basic information of one or more air conditioners and/or external devices from an external communication device, and adding the received basic information onto the drawing selected by the user.

## Patentansprüche

1. Vorrichtung zur integrierten Verwaltung eines Mehrfachklimaanlagensystems mit einer oder mehreren Klimaanlagen, die aufweist:
eine Steuereinheit (100), die durch eine ACP (fortgeschrittene Steuerplattform) Daten an die eine oder mehreren Klimaanlagen und/oder eine externe Vorrichtung sendet,
eine Anzeigeeinheit (400), die durch die Steuereinheit (100) Orte einer oder mehrerer Klimaanalgen und/oder externer Vorrichtungen auf einem Bildschirm anzeigt,
**dadurch gekennzeichnet, dass**
die Steuereinheit (100) ein erstes Steuermodul (101) und ein zweites Steuermodul (102) aufweist,
das erste Steuermodul (101) Basisinformationen über die eine oder mehreren Klimaanlagen und/oder externen Vorrichtungen registriert, die während einer Registrierungsbetriebsart durch eine Eingabeeinheit (200) eingegeben werden,
das zweite Steuermodul (102) die registrierten eine oder mehrere Klimaanlagen und/oder externen Vorrichtungen anzeigt, die registrierten eine oder mehreren Klimaanlagen und/oder externen Vorrichtungen auf dem Bildschirm, der eine entsprechende Zeichnung anzeigt, auswählt und die ausgewählten Vorrichtungen während einer Editierbetriebsart zu von dem Benutzer gewünschten Orten auf dem Bildschirm, der eine Zeichnung anzeigt, die einer inneren Struktur eines Gebäudes entspricht, verschiebt,
die Steuereinheit (100) in der Registrierungsbetriebsart die eine oder mehreren Klimaanlagen und/oder externen Vorrichtungen auf den Zeichnungen, die in der ACP enthalten sind, die von einem Benutzer aus mehreren ACPs ausgewählt wird, hinzufügt und Ortsinformationen der verschobenen Klimaanlagen und/oder externen Vorrichtungen speichert,
die Steuereinheit (100) die ausgewählten Klimaanlagen und/oder externen Vorrichtungen in der Editierbetriebsart gemäß der Eingabe eines Benutzers über eine Maus zu den von dem Benutzer gewünschten Orten verschiebt, und
die Maus in einer Ziehen-und-Loslassen-Weise gehandhabt wird.

2. Vorrichtung nach Anspruch 1, die ferner eine Speichereinheit (300) aufweist, die die Basisinformationen der einen oder mehreren Klimaanlagen und/oder externen Vorrichtungen speichert und Ortsinformationen der Klimaanlage und/oder externen Vorrichtung, die während der Editionsbetriebsart auf dem Bildschirm verschoben wurde, speichert.

3. Vorrichtung nach Anspruch 1 oder 2, die ferner eine Kommunikationseinheit (500) aufweist, die die Basisinformationen der einen oder mehreren Klimaanlagen und/oder externen Vorrichtungen von einer externen Kommunikationsvorrichtung empfängt.

4. Vorrichtung nach einem der Ansprüche 1 bis 3, wobei die Steuereinheit (100) ausgewählte Klimaanlagen und/oder externe Vorrichtungen, die durch eine Benutzereingabe über eine Tastatur zu gewünschten Orten verschoben werden sollen, steuert.

5. Verfahren zur integrierten Verwaltung eines Mehrfachklimaanlagensystems nach Anspruch 1, das aufweist:
Registrieren von Basisinformationen einer oder mehrerer Klimaanlagen und/oder externer Vorrichtungen; und
Editieren von Orten der Klimaanlagen und/oder externen Vorrichtungen auf einem Bildschirm,
wobei das Editieren aufweist:
Auswählen einer Zeichnung, zu der die eine oder mehreren Klimaanlagen und/oder externen Vorrichtungen registriert wurden;
Bewegen der einen oder mehreren Klimaanlagen und/oder externen Vorrichtungen, die von dem Benutzer ausgewählt werden, zu Orten auf dem Bildschirm, der die Zeichnung anzeigt, durch den Benutzer; und
Speichern von Ortsinformationen der verschobenen Klimaanlagen und/oder externen Vorrichtungen,
wobei der Schritt des Verschiebens der einen oder mehreren Klimaanlagen und/oder externen Vorrichtungen das Verschieben der ausgewählten Klimaanlagen und/oder externen Vorrichtungen zu den von dem Benutzer gewünschten Orten gemäß der Eingabe eines Benutzers über eine Maus durchführt, und
wobei die Maus in einer Ziehen-und-Loslassen-Weise gehandhabt wird.

6. Verfahren nach Anspruch 5, wobei der Schritt des Registrierens von Basisinformationen aufweist:
Auswählen einer ACP (fortgeschrittene Steuerplattform) aus einer ACP-Liste;
Hinzufügen einer oder mehrerer Klimaanlagen und/oder externen Vorrichtungen auf einer der Zeichnungen, die in der von dem Benutzer ausgewählten ACP enthalten ist; und
Speichern der hinzugefügten Klimaanlagen und/oder externen Vorrichtungen.

7. Verfahren nach Anspruch 6, das ferner das Empfangen von Basisinformationen einer oder mehrerer Klimaanlagen und/oder externen Vorrichtungen von einer externen Kommunikationsvorrichtung und das Hinzufügen der empfangenen Basisinformationen auf der von dem Benutzer ausgewählten Zeichnung aufweist.

## Revendications

1. Appareil de gestion intégrée d'un système de climatisation multitype présentant un ou plusieurs climatiseurs, comprenant :
une unité de commande (100) qui transmet des données audit un ou auxdits plusieurs climatiseurs et/ou dispositifs externes à travers une plateforme de commande avancée, ACP ;
une unité d'affichage (400) qui affiche les emplacements dudit un ou desdits plusieurs climatiseurs et/ou dispositifs externes sur un écran, par le biais de l'unité de commande (100) ;
**caractérisé en ce que** l'unité de commande (100) inclut un premier module de commande (101) et un second module de commande (102) ;
le premier module de commande (101) enregistre des informations de base dudit un ou desdits plusieurs climatiseurs et/ou dispositifs externes, entrées par le biais d'une unité d'entrée (200) au cours d'un mode d'enregistrement ;
le second module de commande (102) affiche ledit un ou lesdits plusieurs climatiseurs enregistrés et/ou dispositifs externes enregistrés, sélectionne ledit un ou lesdits plusieurs climatiseurs enregistrés et/ou dispositifs externes enregistrés sur l'écran qui affiche un dessin correspondant, et déplace les dispositifs sélectionnés vers des emplacements souhaités d'un utilisateur sur l'écran qui affiche un dessin correspondant à une structure interne d'un bâtiment au cours d'un mode d'édition ;
dans le mode d'enregistrement, l'unité de commande (100) ajoute ledit un ou lesdits plusieurs climatiseurs et/ou dispositifs externes sur l'un des dessins inclus dans la plateforme ACP sélectionnée, parmi une pluralité de plateformes ACP, par un utilisateur, et enregistre des informations de localisation des climatiseurs et/ou dispositifs externes déplacés ;
dans le mode d'édition, l'unité de commande (100) déplace des climatiseurs et/ou dispositifs externes sélectionnés vers des emplacements souhaités d'un utilisateur, selon une entrée de l'utilisateur réalisée au moyen d'une souris ; et
dans lequel la souris est manipulée selon la technique du « glisser-déposer ».

2. Appareil selon la revendication 1, comprenant en outre une unité de stockage (300) qui stocke les informations de base dudit un ou desdits plusieurs climatiseurs et/ou dispositifs externes, et stocke des informations de localisation du climatiseur et/ou dispositif externe déplacé sur l'écran au cours du mode d'édition.

3. Appareil selon la revendication 1 ou 2, comprenant en outre une unité de communication (500) qui reçoit les informations de base dudit un ou desdits plusieurs climatiseurs et/ou dispositifs externes en provenance d'un dispositif de communication externe.

4. Appareil selon l'une quelconque des revendications 1 à 3, dans lequel l'unité de commande (100) commande des climatiseurs et/ou dispositifs externes sélectionnés devant être déplacés vers des emplacements souhaités, par le biais d'une entrée de l'utilisateur réalisée au moyen d'un clavier.

5. Procédé de gestion intégrée d'un système de climatisation multitype selon la revendication 1, comprenant les étapes ci-dessous consistant à :
enregistrer des informations de base d'un ou plusieurs climatiseurs et/ou dispositifs externes ; et
éditer des emplacements des climatiseurs et/ou des dispositifs externes sur un écran ;
dans lequel l'étape d'édition comprend les étapes ci-dessous consistant à :
sélectionner un dessin dans lequel un ou plusieurs climatiseurs et/ou dispositifs externes ont été enregistrés ;
déplacer un ou plusieurs climatiseurs et/ou dispositifs externes sélectionnés par un utilisateur, vers des emplacements sur l'écran qui affiche le dessin par l'utilisateur ; et
stocker des informations de localisation des climatiseurs et/ou dispositifs externes déplacés ;
dans lequel l'étape de déplacement d'un ou plusieurs climatiseurs et/ou dispositifs externes met en oeuvre le déplacement des climatiseurs et/ou dispositifs externes sélectionnés vers des emplacements souhaités d'un utilisateur, selon une entrée de l'utilisateur réalisée à partir d'une souris ; et
dans lequel la souris est manipulée selon la technique du « glisser-déposer ».

6. Procédé selon la revendication 5, dans lequel l'étape d'enregistrement d'informations de base comporte les étapes ci-dessous consistant à :
sélectionner une plateforme de commande avancée, ACP, à partir d'une liste de plateformes ACP ;
ajouter un ou plusieurs climatiseurs et/ou dispositifs externes sur l'un des dessins inclus dans la plateforme ACP sélectionnée par un utilisateur ; et
stocker les climatiseurs et/ou dispositifs externes ajoutés.

7. Procédé selon la revendication 6, comprenant en outre l'étape consistant à recevoir des informations de base d'un ou plusieurs climatiseurs et/ou dispositifs externes à partir d'un dispositif de communication externe, et à ajouter les informations de base reçues au dessin sélectionné par l'utilisateur.
